# EUROPEAN PATENT SPECIFICATION

(11) **EP 3 304 048 B1**
(45) Date of publication and mention of the grant of the patent: **04.09.2019**
(21) Application number: 16717024.0
(22) Date of filing: 31.03.2016
(51) Int. Cl.: G01N 21/59, G01N 33/34, G01N 35/00, A61B 5/1455, G01N 21/84

(54) **CARTRIDGE FOR RECEIVING AN ANALYTE**
KARTUSCHE ZUM EMPFANGEN EINES ANALYTEN
CARTOUCHE DE RÉCEPTION D'UNE SUBSTANCE À ANALYSER

(30) Priority: 28.05.2015 US 201562167888 P; 30.03.2016 US 201615085782
(43) Date of publication of application: 11.04.2018
(60) Divisional application: 18189398.3
(73) Proprietor: Microaeth Corporation, San Francisco, California 94110 (US)
(72) Inventor: BLAIR, Jeffrey R., San Francisco, California 94127 (US); BLAIR, Steven S., San Francisco, California 94127 (US); RADDING, Zachary, Lafayette, California 94549 (US); YOUNG, Kris, Grandville, Michigan 49418 (US)
(74) Representative: ZBM Patents - Zea, Barlocci & Markvardsen
(86) International application number: PCT/US2016/025397
(87) International publication number: WO 2016/190959

(56) References cited:
- CN-U- 204 346 781
- JP-A- H11 271 227
- JP-A- 2009 271 037
- JP-A- 2009 300 299
- US-A- 3 260 413
- US-A- 4 264 560
- US-A- 4 975 581
- US-A- 5 303 037
- US-A- 5 434 084
- US-A- 5 440 126
- US-A- 5 866 430
- US-A1- 2003 231 309
- US-A1- 2005 188 746
- US-A1- 2005 254 259
- US-A1- 2007 060 819
- US-A1- 2007 140 900
- US-A1- 2009 027 674
- US-A1- 2009 056 156
- US-A1- 2013 229 651
- US-A1- 2013 230 428
- US-A1- 2015 065 390
- US-B1- 6 205 272
- US-B1- 7 353 954
- US-B2- 8 030 080

## Description

### CROSS-REFERENCE TO RELATED APPLICATION

This application claims the benefit of U.S. Provisional Application No. 62/167,888, filed May 28, 2015.

### FIELD

The invention relates, in general, to an apparatus and method for receiving an analyte on a substrate material and, more particularly, for photometric analysis of an analyte such as black carbon.

### BACKGROUND

A photometric particle analyzer is a type of instrument that is used to measure one or more analytes present in an aerosol. Analytes may include without limitation particulate matter (PM), light-absorbing carbon, black carbon (BC), elemental carbon (EC), ultraviolet absorbing particulate matter (UVPM), size fractionated particulate matter, size fractionated light absorbing carbon, size fractionated black carbon and size fractionated ultraviolet absorbing particulate matter. Such an instrument may be used for stationary, mobile, or on-person monitoring, and as such the instrument may be designed differently for various applications. Personal exposure monitors may differ from stationary implementations such that the instrument is a miniaturization of a larger device and may also be operated untethered using battery power. In the case that the instrument is worn on-person, it may be sampling and/or analyzing analytes of interest from the breathing zone of the person wearing the device.

An analyte of interest to health and climate research is carbonaceous aerosols which are comprised of light absorbing particles produced by incomplete combustion, also known as black carbon (BC), which are formed through combustion and have been shown to cause adverse health outcomes when inhaled through the respiratory system.

A method and apparatus well known to those who measure carbonaceous aerosols is the Aethalometer (R), an analytical instrument used for over 30 years to measure aerosol black carbon. This method and instrument function on the principles of an optical transmission photometric analyzer that measures the incremental change in optical attenuation of a filter due to particles that are collected on the filter over time. Carbonaceous particles are optically absorbing and thus can be measured photometrically.

Instruments that use the Aethalometer (R) method collect particles in an air stream by drawing the air through a porous filter which then separates and collects particles in and on the filter structure. The instrument then measures the reduction of light passing through the particle laden filter by illuminating one surface of the filter and detecting the amount of light that passes through the filter using a photo-sensitive detector on the opposite side. If optically absorbing particles are present in the air stream they will accumulate on and in the filter and the optical transmission will change as a portion of the emitted light will be absorbed by these particles. The detection of this change forms the basis through which the measurement is made. Collection and reference channels are located on separate portions of the filter, where the collection portion of the filter collects particles from the air stream and the reference portion does not collect particles. The reference portion of the filter may, in some instruments, have pre-filtered air flow through it. Both sensing and reference portions of the filter are illuminated and have separate detectors opposite the illuminated side of the filter substrate to detect the illuminated light. The reference channel is used to measure changes in system stability due to environmental or electro-optical variation that could affect the intensity of the light source, sensitivity and/or range of the detectors and/or associated electrical circuitry. The ratio of the intensity of light through these portions of the filter relates to the mass loading of particles on the filter at a given time. The instrument then uses flow measurement and other parameters to convert the measured optical attenuation to a mass concentration with typical units of nanograms per cubic meter or micrograms per cubic meter.

An implementation of the Aethalometer (R) method is the "rackmount" Aethalometer (R) instrument which has an analytical chamber in communication with a glass or quartz fiber based filter material, and a pump in communication with the filter material. The pump is controlled to create a flow of air through the filter which captures particles from the sample air stream where they are retained. The analytical chamber has one or more light sources which illuminate the filter in one or more areas, one of which is the location where the particles are collected and retained on the filter. Commercial implementations of the Aethalometer (R) have had light sources of one or more wavelengths and two or more optical detectors which are used to analyze the particles retained in the filter. Typically one or more light emitting diode (LED) light emitters are used per wavelength of light, with additional LED emitters added as required to increase the intensity or normalize the distribution of light from the light source. These instruments also include a roll of filter material that can be moved under software control to a clean portion of the filter roll when the filter becomes too heavily loaded with particles for measurement to continue. Even or normalized distribution of emitted light on the analytical area typically requires that the emitters have enough distance to the analytical area of the filter so that the beam area of the emitter (depending on the beam half angle, or emission pattern) is large enough to illuminate the analytical areas on the filter and in other areas of the analytical chamber.

Another implementation of the Aethalometer (R) method that is well known to those who study carbonaceous aerosols is the microAeth (R) model AE51, a miniaturized instrument that measures carbonaceous aerosols using 880 nm light emitted by multiple light emitting elements. These multiple light emitting LEDs are used to increase the intensity and distribution of the illumination on different portions of the glass fiber filter as well as areas that are not covered by the glass fiber filter. This instrument includes an analytical chamber, miniature pump, flow controller, microprocessor, battery, Universal Serial Bus communications and data storage memory. This device operates for approximately 30 hours using battery power and depending on the concentration of black carbon being measured and the sampling flow rate, the filter can be used for up to a few days maximum before being exchanged. In this implementation the plastic airflow guide serves as a translucent optical window that also serves as a pneumatic guide, focusing the air sample to the specific sensing spot location on the filter while allowing light to be transmitted thus illuminating, in addition to other areas, the same location where the particles are collected.

A challenge in implementing such instruments is in maximizing the operational runtime of the instrument, while minimizing the size of the instrument and weight of its battery supply. There is a need for lower power and more portable instruments to enable larger scientific studies relating to the health effects of exposure to air pollution.

US 2009/027674 A1 discloses a system for collection of particulates from a fluid stream comprising biological and chemical agents onto the tape of a spooled cartridge comprising a housing and a length of tape between first and second drums.

### SUMMARY

Briefly and in general terms, the present invention is directed to a cartridge for receiving an analyte.

In aspects of the present disclosure, an apparatus comprises a substrate holding assembly. The substrate holding assembly is configured to receive a substrate and deliver an analyte to the substrate. The substrate holding assembly includes a lower housing and an upper housing, and the lower housing and the upper housing movable relative to each other to secure the substrate between the lower and upper housings.

In aspects of the present disclosure, a method comprises directing light from a first light emitter into a first input facet of an end face of a light guide, the light guide having a light guide body, a first branch protruding from the body, and a second branch protruding from the body. The method also comprises directing light from a second light emitter into a second input facet of the end face. The method also comprises reflecting, within the light guide body, the light from the first light emitter from a first side facet of a first side face of the light guide body toward the first branch of the light guide and from a second side facet of the first side face toward the second branch of the light guide. The method also comprises reflecting, within the light guide body, the light from the second light emitter from a first side facet of a second side face of the light guide body toward the first branch of the light guide and from a second side facet of the second side face toward the second branch of the light guide. The method also comprises allowing the light from all the light emitters to travel out of a tip of the first branch to a first region of the substrate. The method also comprises allowing the light from all the light emitters to travel out of a tip of the second branch to a second region of the substrate, wherein an analyte is present on one or both of the first region and the second region of the substrate. The method also comprises characterizing the analyte by analyzing the light from all the light emitters passing through the substrate.

The present invention, relates to a cartridge as defined in appended claim 1.

The features and advantages of the invention will be more readily understood from the following detailed description which should be read in conjunction with the accompanying drawings.

### BRIEF DESCRIPTION OF THE DRAWINGS

FIG. 1 is schematic diagram of an exemplary apparatus for receiving an analyte on a substrate.
FIG. 2 is a schematic diagram of the apparatus of FIG. 1 while in an open state to allow removal and insertion of the substrate.
FIG. 3 is a cross-section view of an exemplary substrate holding assembly for the apparatus of FIG. 1.
FIG. 4 is an isometric diagram of the substrate holding assembly of FIG. 3.
FIG. 5 is a top view of the substrate holding assembly of FIG. 3.
FIG. 6 is a front view of the substrate holding assembly of FIG. 3.
FIG. 7 is a plan view of an exemplary light guide for the substrate holding assembly of FIG. 3.
FIG. 8 is a perspective view of a portion of the light guide of FIG. 7 and an exemplary light emitter for generating red, green, and blue light.
FIG. 9 is an isometric view showing an exemplary substrate holding assembly for the apparatus of FIG. 1, and showing the light guide after having been removed from the substrate holding assembly.
FIG. 10 is an isometric, assembled view of the substrate holding assembly of FIG. 9 while in a closed state.
FIG. 11 is an isometric, assembled view of the substrate holding assembly of FIG. 9 while in an open state.
FIG. 12 is a sectional view of an exemplary cartridge for carrying the substrate.
FIG. 13 is a sectional view of the cartridge along line 13-13 in FIG. 12.
FIG. 14 is a plan view of an exemplary substrate.
FIG. 15 is a section view of the substrate along line 14-14 in FIG. 14.

### DETAILED DESCRIPTION OF EXEMPLARY EMBODIMENTS

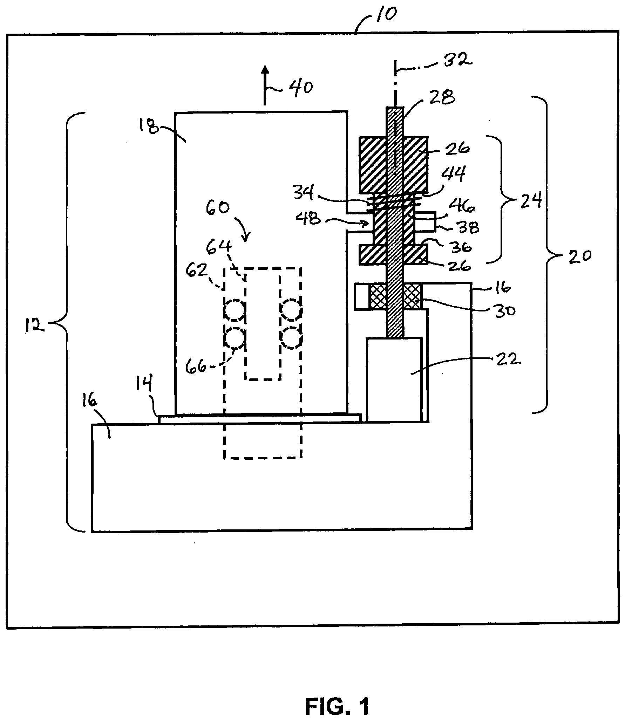

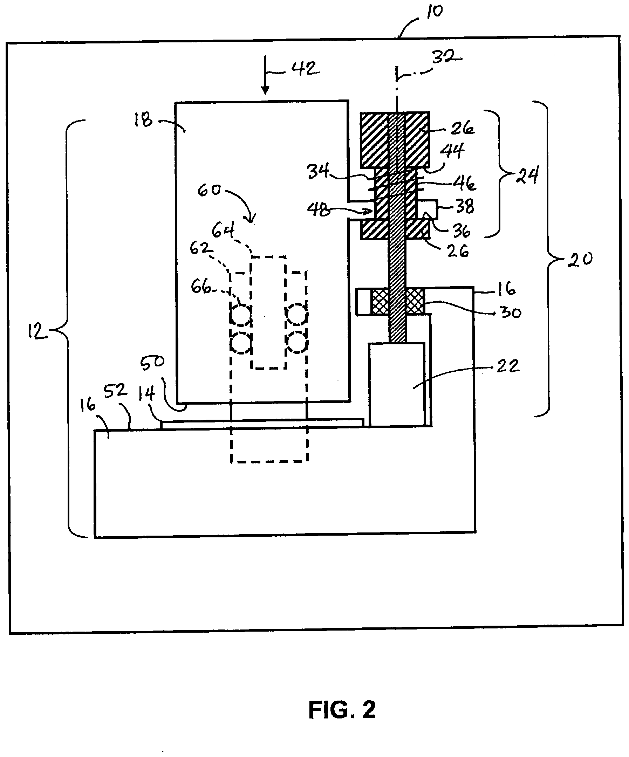

Referring now in more detail to the exemplary drawings for purposes of illustrating exemplary aspects of the disclosure, wherein like reference numerals designate corresponding or like elements among the several views, there is shown in FIGS. 1 and 2 exemplary apparatus 10 for receiving an analyte. The term "analyte" herein refers to a substance, chemical, or biological constituent that is of interest. For example, an analyte can be suspensions in a gas or a component of a gas. An analyte can be aerosol particulate material. An analyte can be black carbon in aerosol or others mentioned in the background section above. Apparatus 10 may use light to obtain information about the nature, composition, or other property of the analyte.

Apparatus 10 includes substrate holding assembly 12 configured to receive substrate 14. Substrate holding assembly 12 delivers the analyte to substrate 14. Analyte may be deposited on substrate 14, trapped on or within substrate 14, and/or alter an optical characteristic of substrate 14. Substrate holding assembly 12 includes lower housing 16 and upper housing 18. One of the lower and upper housings 16, 18 includes one or more passageways and a light transmission subassembly. The passageways convey analyte to areas of substrate 14, and the light transmission subassembly directs light to those areas of the substrate. The other one of the housings includes at least one photometric sensor that detects light passing through those areas of the substrate.

Lower housing 16 and upper housing 18 are movable relative to each other in a manner that secures substrate 14 between lower housing 16 and upper housing 18. Lower housing 16 and upper housing 18 are movable relative to each other by means of actuator assembly 20 that includes motor 22 and screw subassembly 24. Screw subassembly 24 is operatively coupled to motor 22 and upper housing 18. The phrase "operatively coupled," as used herein to describe one or more elements, encompasses direct and indirect connection and means that at least one of the elements operates in a manner that causes a change in the condition or position of other elements.

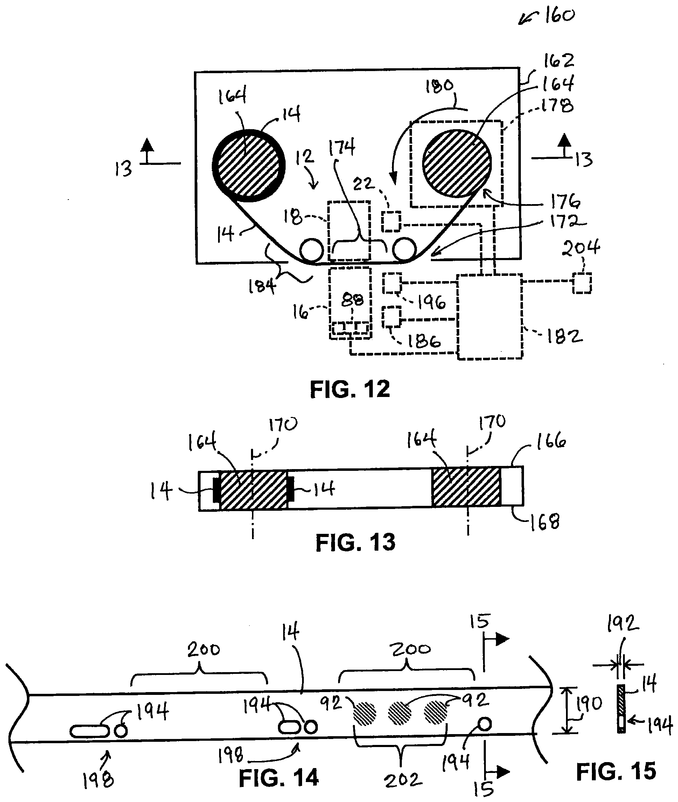

Screw subassembly 24, when actuated by motor 22 running in a first direction, causes upper housing 18 and lower housing 16 to move apart. Such movement allows for insertion of substrate 14 in between lower housing 16 and upper housing 18. For example, a portion of a cartridge (for example, cartridge 160 of FIG. 12) containing substrate 14 may be installed between lower housing 16 and upper housing 18. When actuated by motor 22 running in an opposite, second direction, screw subassembly 24 causes upper housing 18 and lower housing 16 to move toward each other. Such movement allows for securement of substrate 14 which has been inserted between lower housing 16 and upper housing 18. Thereafter, motor 22 can be run in the first direction so that upper housing 18 and lower housing 16 move apart again, which allows substrate 14 to be repositioned, removed, or replaced with a fresh substrate. For example, substrate 14 may be made to slide relative to lower and upper housings 16, 18. As a further example, a cartridge containing substrate 14 may be removed from substrate holding assembly 12.

Screw subassembly 24 includes nut 26 and screw 28 engaged to the helical thread of nut 26. Screw 28 is rotatably secured to lower housing 16 by roller bearing 30. Rotatably secured means that screw 28 is capable of rotating, about screw central axis 32, relative to lower housing 16 while screw 28 is prevented from translating axially, in a direction along screw central axis 32, relative to lower housing 16. The outer housing of motor 22 is fixedly secured to lower housing 16. Fixedly secured encompasses direct and indirection connection, and means that the motor housing is incapable of moving relative to lower housing 16. Motor 22 actuates screw subassembly 24 by rotating screw 28 about screw central axis 32.

As a result of screw rotation, screw 28 moves nut 26 axially along screw central axis 32. Nut 26 is moved from a first position (FIG. 1) on screw 28 to a second position (FIG. 2) on the screw 28. Nut 26 is operatively coupled to upper housing 18 such that, when nut 26 is in the first position, upper housing 18 is in a lowered position relative to lower housing 16 as shown in FIG. 1. This allows substrate 14 to be sealed and/or tightly secured between lower housing 16 and upper housing 18. When nut 26 is in the second position, as shown in FIG. 2, upper housing 18 is in a raised position relative to lower housing 16. This allows substrate 14 to be released from between lower housing 16 and upper housing 18.

Screw subassembly 24 includes spring 34 which urges upper housing 18 onto substrate 14 (or onto lower housing 16 if no substrate is present). Alternatively, no such spring is present, in which case nut 26 pushes upper housing 18 onto substrate 14 (or onto lower housing 16 if no substrate is present)

Still referring to FIGS. 1 and 2, spring 34 and nut 26 are operatively coupled to upper housing 18 in the following manner. When nut 26 is in the first position, as shown in FIG. 1, nut 26 does not prevent upper housing 18 from pressing on substrate 14, and spring 34 exerts a spring force on upper housing 18 that causes upper housing 18 to press on substrate 14. Nut 26 does not push upper housing 18 on substrate 14. Instead, the spring force pushes upper housing 18 on substrate 14. The resiliency of spring 34 has the potential advantage of preventing excessive pressure from being applied on substrate 14 and/or parts of actuator assembly 20. Another potential advantage is that the amount of force applied to substrate 14 can be more easily controlled. When nut 26 is in the second position, as shown in FIG. 2, nut 26 counteracts the spring force, nut 26 prevents upper housing 18 from pressing on substrate 14, and the spring force does not cause upper housing 18 to press on substrate 14.

Nut 26 includes first lip 36 configured to engage upper housing 18 as explained below. First lip 36 can be a rib, post, flange, C-ring, or other structure capable of engaging upper housing 18. Upper housing 18 includes upper housing portion 38 placed between first lip 36 and spring 34. When motor 22 is running in the first direction, first lip 36 moves away from substrate 14 and lower housing 16. When this movement occurs (for example, in upward direction 40 in FIG. 1), first lip 36 contacts and pushes upper housing portion 38 (as shown in FIG. 2), which causes upper housing 18 to move away from substrate 14 and lower housing 16.

When motor 22 is running the second direction, first lip 36 moves toward substrate 14 and lower housing 16. When this occurs (for example, in downward direction 42 in FIG. 2), upper housing 18 contacts substrate 14 (or contacts lower housing 16 if no substrate is present), and then first lip 36 loses contact with upper housing portion 38 (as shown in FIG. 1), and the spring force from spring 34 causes upper housing 18 to press on substrate 14 (or press on upper housing 18 if no substrate is present).

Spring 34 is held captive between upper housing portion 38 and second lip 44 of nut 26, as shown in FIGS. 1 and 2. Spring 34 is a compression spring. Central segment 46 of nut 26 passes through the center of spring 34 to keep spring 34 in place between upper housing portion 38 and second lip 44. Nut 26 is sideably retained within bore 48 of upper housing portion 38. Central segment 46 of nut 26 slides freely through bore 48.

Another type of spring may be used, such as a tension spring, torsion spring, leaf spring, elastomeric member, or other device capable of exerting a spring force. Also, the spring need not be held captive between upper housing portion 38 and second lip 44 of nut 26. For example, in lieu of spring 34 illustrated herein, one end of a tension spring can be attached to upper housing portion 38 or another part of upper housing 18, and the opposite end of the tension spring can be attached to lower housing 16. The tension spring would cause upper housing 18 to press on substrate 14 (or press on upper housing 18 if no substrate is present).

As shown in FIG. 2, upper housing 18 includes upper substrate contacting surface 50. Lower housing 16 includes lower substrate contacting surface 52. The upper and lower substrate contacting surfaces 50, 52 are movable relative to each other to secure substrate 14 between the upper and lower substrate contacting surfaces 50, 52. The upper and lower substrate contacting surfaces 50, 52 are two opposing surfaces. These two opposing surfaces clamp substrate 14 so as to prevent or minimize passage of air, which may contain contaminants, through the interface between substrate 14 and the opposing surfaces. To help prevent or minimize passage of air through the interface, any of the opposing surfaces may include resilient gaskets, and the two opposing surfaces may be constrained to be parallel to each other at all times.

Apparatus 10 further comprises linear guide subassembly 60, schematically depicted in broken line behind lower and upper housings 16, 18 in FIGS. 1 and 2. Linear guide subassembly 60 includes base 62, carriage 64, and rotating bearings 66 that slideably carry upper housing 18 on lower housing 16. Upper housing 18 is fixedly mounted on carriage 64. Base 62 is fixedly mounted on lower housing 16. Carriage 64 rolls on bearings 66 within base 62 to allow carriage 64 to slide exclusively along a single axis relative to base 62. Linear guide subassembly 60 is arranged so that the single axis of movement is perpendicular to the plane of substrate 14. This constrains movement of upper substrate contacting surface 50 to be perpendicular to lower substrate contacting surface 52, and this in turn helps to keep those two opposing surfaces 50, 52 parallel.

The linear guide subassembly described above is a type of rolling element linear motion bearing. Rotating bearings 66 may be a roller type or ball type. Rotating bearings 66 are constrained within and travel within a linear groove formed within base 62. This provides a single degree of freedom in movement of carriage 64. Carriage 64 does not rotate about a central axis and is only able to translate linearly. This allows apparatus 10 to have only a single linear guide subassembly, which allows for a more compact and lighter weight design. Also, this allows upper housing 18 to resist off-center side loading that might be caused by actuator assembly 20, as discussed below.

Other types of linear guides may be used. For example, a linear guide known in the art as a sliding contact linear motion bearing may be used. A sliding contact linear motion bearing does not have a rotating or rolling element.

Linear guide subassembly 60 potentially allows for space savings and a more compact design, in that actuator assembly 20 optionally needs only a single screw subassembly 24 to move lower and upper housings 16, 18 relative to each other. Screw subassembly 24 may be positioned off-center, to one side of upper housing 18, as shown in FIGS. 1 and 2. The off-center position of screw subassembly 24 may cause side of upper substrate contacting surface 50 (FIG. 2) to press with more pressure on substrate 14. However, even with the off-center position of screw subassembly 24, linear guide subassembly 60 may help to ensure that all areas of upper substrate contacting surface 50 press substrate 14 with uniform pressure. It is believed that uniform pressure on substrate 14 may help prevent or minimize passage of air through the interface between substrate 14 and the opposing surfaces 50, 52.

Substrate holding assembly 12 of FIGS. 1 and 2 may be used to hold a substrate in various types of analytical instruments, such as those described in U.S. Patent Nos. 4,893,934; 8,411,272; and 8,531,671. In these patent publications, the substrate is sometimes referred to as a filter. For example, substrate holding assembly 12 may be used within an Aethalometer (R) or equivalent device to deliver analyte to a collection area of the substrate (or filter) and to illuminate both the collection area and a reference area of the substrate as described in U.S. Patent No. 4,893,934. Substrate holding assembly 12 may be used to deliver analyte to two collection areas of the substrate (or filter) and to illuminate both collection areas as described in U.S. Patent No. 8,411,272. Substrate holding assembly 12 may be used within an analytical instrument for determining the concentration of black carbon particles in a combustion exhaust as described in U.S. Patent No. 8,531,671.

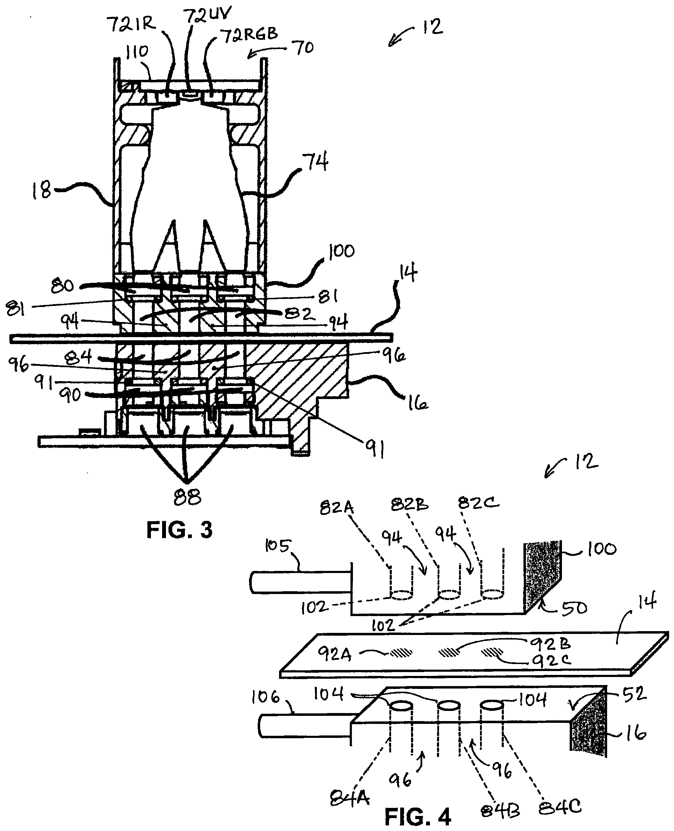

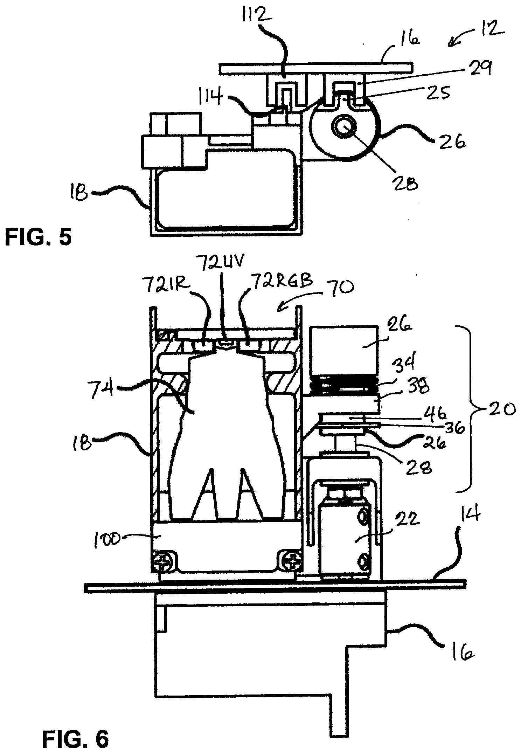

Substrate holding assembly 12 of FIGS. 1 and 2 may be configured as shown in FIGS. 3-6. FIG. 3 shows a partial cross-section view of substrate holding assembly 12. FIG. 4 shows a diagrammatic view thereof. FIG. 5 shows a top view thereof. FIG. 6 shows a front view thereof. In FIGS. 3 and 6, structures illustrated above substrate 14 are components of upper housing 18. Structures illustrated below substrate 14 are components of lower housing 16. As shown in FIGS. 3 and 6, upper housing 18 includes light transmission subassembly 70 arranged to direct light toward lower housing 16. Light transmission subassembly 70 may include one or a combination of light emitters and a light guide.

In FIG. 3, light transmission subassembly 70 includes three light emitters 72 and a single unitary light guide 74 including multiple branches 76. Each branch 76 leads to its own sealed optically transmitting window 80. Each window 80 is a hole that is optionally covered by an optically transparent plate that allows light coming from branches 76 to pass through window 80 but prevents any air from passing through window 80. On the other side of windows 80 are upper optical paths 82 within upper housing 18. Each upper optical path 82 is an empty cavity of air forming a passageway that leads straight to the top surface of substrate 14.

Lower housing 16 includes lower optical paths 84 and photometric sensors 88. Lower optical paths 84 are located directly below substrate 14. Each lower optical path 84 is an empty cavity of air forming a passageway that leads from the bottom surface of substrate 14 straight to its own sealed optically transmitting window 90 located directly above a separate one of the photometric sensors 88. Each window 90 optionally includes an optically transparent plate that allows light traveling within lower optical paths 84 to pass through window 90 but prevents any air from passing through window 90. Optical signals in the form of light traveling within lower optical paths 84 reach photometric sensors 88. Photometric sensors 88 sense the optical signals from lower optical paths 84.

FIG. 4 shows a diagram of optical channels A, B and C within substrate holding assembly 12 of FIG. 3. Letters A, B, and C are used for each aligned pair of upper optical path 82 and lower optical path 84 together with the corresponding optical area 92 on substrate 14. Each optical path pair together with its corresponding optical area 92 form a single optical channel.

Upper optical paths 82 are separated from each other by walls 94 that are optically impermeable. Here, the phrase "optically impermeable" means that optical signals in the form of light traveling within any of the upper optical paths 82 are incapable of passing through walls 94. Walls 94 are arranged to allow light from light transmission subassembly 70 to pass through each of upper optical paths 82 toward lower housing 16. Simultaneously, at least one of these upper optical paths 82 is arranged to convey air potentially containing an analyte, originating from outside of the substrate holding assembly 12, toward lower housing 16.

Lower optical paths 84 are separated from each other by walls 96 that are optically impermeable, so optical signals within any of the lower optical paths 84 are incapable of passing through walls 96. Walls 94, 96 help to prevent or minimize optical signals in one optical channel from traveling to another optical channel.

Other design factors may help prevent or minimize optical signals in one optical channel from traveling to another optical channel. For example, the spring force from spring 34 of screw subassembly 24 may be selected so that there is sufficient pressure to create sealing contact between substrate 14 and upper substrate contacting surface 50 of upper housing 18 and between substrate 14 and lower substrate contacting surface 52 of lower housing 16. Also, lower housing 16 and upper housing 18 may be carefully arranged and connected by means of linear guide subassembly 60 to keep lower and upper substrate contacting surfaces 50, 52 parallel.

Upper housing 18 is used to align and house light transmission subassembly 70 that distributes light to separate optical paths. Upper housing 18 introduces an aerosol stream into upper optical paths 82 below sealed optically transmitting windows 80 in order to bring analyte to substrate 14. Particular areas of substrate 14 (referred to as optical areas 92) are contained between and sealed against upper housing 18 and lower housing 16. Optical areas 92 separate analyte from the aerosol stream defined by one or more aligned pairs of upper and lower optical paths 82, 84.

Aerosol is drawn into substrate holding assembly 12 via a vacuum applied to one or more of lower optical paths 84. The vacuum is generated by a pump (for example, vacuum pump 186 in FIG. 12) or other vacuum source operably connected to one or more of lower optical paths 84. The vacuum draws the aerosol, originating from outside of apparatus 10, through upper housing 18 via an inlet and is introduced to one or more upper optical paths 82. A separately removable element, referred to as manifold 100, may contain upper optical paths 82. Optionally, manifold 100 may be a block of aluminum or other light impermeable material through which passageways are drilled, molded, or formed to create upper optical paths 82. Manifold 100 can be removed from the rest of upper housing 18, without removal of light guide 74 from upper housing 18, to enable cleaning of upper optical paths 82.

As shown in FIG. 4, optical areas 92 are defined on substrate 14 by the location and size of upper optical paths 82 of the upper housing 18. Optical areas 92 are where upper housing 18 (specifically, upper substrate contacting surface 50) contacts and seals against substrate 14. Two upper optical paths 82 may be used to collect analyte at the same or different flow rates. The remaining upper optical path 82 may not collect analyte (for example, due to no vacuum being applied to the remaining optical path) and may be used as a reference channel described later. Manifold 100 includes optically transmitting window 80 (FIG. 3) above each of upper optical areas 92 to allow transmission of light from light guide 74, through upper optical path 82 and onto optical areas 92 of substrate 14. FIG. 4 shows lower and upper housings 16, 18 in a separated or open orientation relative to each other. When lower and upper housings 16, 18 are in a clamped or closed orientation, as shown in FIG. 3, some of the light traveling through upper optical paths 82 also passes through substrate 14 and into lower optical paths 84. The intensity and/or other characteristic of the light passing through substrate 14 are detected by photometric sensors 88 at the opposite end of lower optical paths 84.

One or more collection channels may be desired to facilitate analysis of output from photometric sensors 88. A collection channel is one that provides a reading of the effect, or lack thereof, of the analyte of interest. Collection channels may be formed by applying a vacuum, as previously discussed, to suction air from outside apparatus 10 to selected upper optical paths 82 for the collection channel. Air from outside apparatus 10 may also be fed into the selected upper optical paths 82 by a pump. The volumetric rate at which air is suctioned or fed into the selected upper optical path 82 may be carefully controlled. Also, to facilitate analysis of the output from photometric sensors 88, the volumetric rate for one collection channel may be different from that for another collection channel, as discussed in U.S. Patent No. 8,411,272.

One or more reference channels may be desired to facilitate analysis of output from photometric sensors 88. A reference channel is one which provides a baseline reading from substrate 14, the baseline reading being indicative of no or insignificant effect from the analyte of interest. Reference channels may be formed by having no air from outside apparatus 10 drawn into selected upper optical paths 82. This could be achieved by preventing or stopping the application of vacuum to lower optical paths 84 aligned with the selected upper optical paths 82 of the reference channel. Reference channels may be formed by allowing pre-filtered or clean air to be drawn into selected upper optical paths 82. Pre-filtered and clean air refer to air that comprises no analyte or comprises only a trace amount of analyte considered insignificant.

Referring again to FIG. 4, upper substrate contacting surface 50 includes a plurality of upper apertures 102 at the bottom ends of upper optical paths 82. Lower substrate contacting surface 52 includes a plurality of lower apertures 104 at the top ends of lower optical paths 84. To form one or more collection channels, one or more upper apertures 102 are arranged to convey air potentially containing an analyte, originating from outside substrate holding assembly 12, toward one or more lower apertures 104. For example, one end of inlet pipe 105 may be connected, via upper optical paths 82, to one or more one or more upper apertures 102 while the opposite end of inlet pipe 105 is exposed to air or gas that contains or might contain the analyte of interest. One or more lower apertures 104 are arranged to convey the air out of the substrate holding assembly 12. For example, one end of an exhaust pipe 106 may be connected, via lower optical paths 84, to one or more lower apertures 104 while the opposite end of exhaust pipe 106 is connected to a vacuum pump (for example, vacuum pump 186 in FIG. 12).

Referring again to FIG. 3, lower optical paths 84 are located below substrate 14, light transmitting windows 80 and seals 81. Seals 81 may be O-rings pressed against edges of an optically transparent plate covering each window 80. Photometric sensors 88 are located below transmitting windows 90 and seals 91. Seals 91 may be O-rings pressed against edges of an optically transparent plate covering each window 90.

As previously discussed, screw 28 of actuator assembly 20 (FIG. 6) moves upper housing 18. When actuated by motor 22, screw 28 rotates so that spring 34 applies a force that clamps upper housing 18 against lower housing 16 (or clamps substrate 14 between lower and upper housings 16, 18). When screw 28 is rotated in the opposite direction, an opposing force is provided by nut 26, which raises upper housing 18 away from lower housing 16 and substrate 14.

Multiple springs may be used to apply forces at multiple areas of upper housing 18 so that upper housing 18 clamps against substrate 14 or lower housing 16. If multiple springs are used, more force may be required to oppose the spring clamping force as compared to singular spring 34 of FIG. 6. Nut 26 applies a force against spring 34 when moving in the clamping position and uses the motion of the screw 28 to load spring 34 and apply the required amount of spring compression. In this way the spring force is applied after upper housing 18 contacts substrate 14, compressing and sealing upper housing 18 and lower housing 16 together against substrate 14. The amount of spring force is adjustable depending on the requirements of substrate 14 or/and the configuration of housings 16, 18. For example, clamping force may depend on the material type of substrate 14 and height/distance for moving housings 16, 18.

Referring to FIG. 5, the spring force can be controlled by position feedback of nut 26. For example, nut 26 may include position flag 25 that is used with optical interrupter sensor 29 to detect the position of nut 26 along central axis 32 of screw 28. Flag 25 could be used with multiple optical interrupter sensors 29 for position detection. Optical interrupter sensors 29 are a type of switch that actuates when light is interrupted by flag 25. Alternatively, other types of switches may be used, such as mechanical switches which are actuated by physical contact with flag 25. A rotary encoder may be used on screw 28 or motor 22 to measure rotation or position using optical, mechanical or magnetic sensing or encoding principles (incremental or absolute) in order to control and determine the position of upper housing 18, and/or the amount of spring force applied against substrate 14 between upper housing 18 and lower housing 16.

Referring to FIG. 6, light transmission subassembly 70 includes a plurality of light emitters 72 which emit light in a multiplicity of wavelengths. A light emitter may be a single point emitter. A single point emitter has a single element that generates light. A single point emitter may be a light emitting diode mounted on printed circuit board 110. A light emitter may be multiple point emitters. A multiple point emitter has multiple elements that generate light, and the elements are housed together in a single electronic package mounted on printed circuit board 110. Power supplied to the electronic package is distributed within the electronic package to all the elements that generate light.

In FIGS. 3 and 6, the plurality of light emitters 72, as a group, generate ultraviolet, blue, green, red and infra-red light. Each of the ultraviolet, blue, green, red, and infrared lights is referred to as an analytical wavelength. Each analytical wavelength may include multiple wavelengths, with highest intensity or energy occurring at a peak wavelength. Each analytical wavelength has a peak wavelength that is different from that of another analytical wavelength. For example, the ultraviolet (UV) light may have a peak wavelength of 375 nm. The blue light may have a peak wavelength of 470 nm. The green light may have a peak wavelength of 528 nm. The red light may have a peak wavelength of 625 nm. The infra-red light may have a peak wavelength of 880 nm. Other peak wavelengths may be used.

All five analytical wavelengths mentioned above may be used to study an analyte of interest. In other aspects, a lesser or greater number of analytical wavelengths may be used and/or analytical wavelengths having peak wavelengths other than those listed above may be used.

In FIGS. 3 and 6, numeral 72 refers to any of the light emitters, and numerals 72IR, 72UV, and 72RGB refer to individual light emitters. Light emitter 72IR, in the form of a single point emitter, emits the infrared light. Light emitter 72UV, in the form of a single point emitter, emits the ultraviolet light. Light emitter 72RGB, in the form of a multiple point emitter, generates red, green, and blue light. Each of these three analytical wavelengths (red, green, and blue light) is generated by a separate light emitting element, and all three elements are aggregated into a single light emitter package, referred to as an aggregate light emitter. In other aspects, aggregate light emitter 72RGB is not utilized, and separate light emitters are used instead to generate the red, green, and blue light.

As previously discussed, upper housing 18 is moveable perpendicular to the plane of substrate 14 so as to allow for removal, insertion or movement of substrate 14 and to clamp upper housing 18 and lower housing 16 together to make a seal against substrate 14. The seal enables air to be drawn through substrate 14 for the purpose of bringing analyte to substrate 14. The position of upper housing 18 is sensed using optical interrupter sensor 112 (FIG. 5) and one or more flags 114 that are fixedly secured to upper housing 18. Optical interrupter sensor 112 is fixedly secured to lower housing 16. Flags 114 are machined into upper housing 18 or fixedly secured by other means to upper housing 18, at different areas upper housing 18. Flags 114 are spaced apart from each other. As upper housing 18 is moved by actuator assembly 20 to different positions relative to lower housing 16, a different one of the flags 114 interrupts an optical signal of optical interrupter sensor 112, which causes optical interrupter sensor 112 to generate a signal indicative of a position of interest for upper housing 18.

At least three positions of interest are defined for upper housing 18. The three positions are: closed (for example, FIG. 1), slightly open, and substrate removable (for example, FIG. 2). Each position indicates that upper housing 18 is at a different distance away from lower housing 16. These positions may be detected by optical interrupter sensor 112 alone, or through a combination of sensing of the position of nut 26 of actuator assembly 20 (for example, through use of optical interrupter sensor(s) 29 and/or encoders as previously described) and signals from optical interrupter sensor 112.

An electronic controller (for example, controller 182 of FIG. 12) is in communication with optical interrupter sensor 112 and motor 22. The electronic controller detects a position of interest based on signals from optical interrupter sensor 112, and electronic controller starts or stops motor 22 based on the signal received from optical interrupter sensor 112. When the closed position is detected, the lower and upper housings 16, 18 are applying a clamping force (aided by spring 34 of actuator assembly 20 for example) on substrate 14 so as to form a seal against substrate 14. When the fully open (substrate removable) position is detected, lower and upper housings 16, 18 are spaced apart by a first predetermined distance. The first predetermined distance may be that required to allow insertion or removal of a cartridge (for example, cartridge 160 of FIG. 12) that contains substrate 14. When the slightly open position is detected, lower and upper housings 16, 18 are spaced only slightly apart (spaced apart by a second predetermined distance less than the first predetermined distance) so that they apply little or no force on substrate 14. With little or no force on substrate 14, substrate 14 may be repositioned so that a clean segment of substrate 14 is moved between lower and upper housings 16, 18. For example, repositioning may be accomplished by winding substrate 14 on a spool within the cartridge.

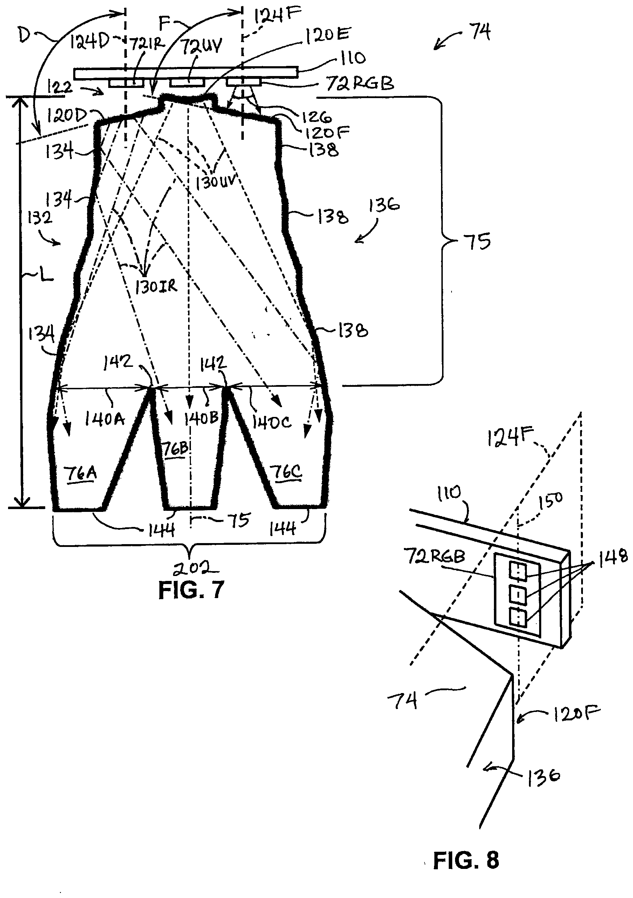

FIG. 7 is an enlarged view of light guide 74 in FIGS. 3 and 6. Light guide 74 is made of a wide spectrum transmitting plastic that is efficient in both ultraviolet and infra-red transmission. For example, a polymer material may be injection molded to form light guide 74. Light guide 74 only needs to transmit the wavelengths of light emitted by the type of light emitters actually used. For example, if no light emitter for transmitting ultraviolet light is used, then the material for light guide 74 need not be particularly transmissive of ultraviolet light.

If UV light is one of the analytical wavelengths, then it would be desirable to select a material for light guide 74 that has good UV transmittance. For example, light guide 74 can be made of poly(methyl methacrylate) (PMMA), polycarbonate, or a thermoplastic polyolefin resin. Various formulations of PMMA may be suitable, such as those specially developed to have high UV transmittance. Various formulations of thermoplastic polyolefin resin may be suitable. The thermoplastic polyolefin resin may be one that has a 92% transmittance in the 400-800 nm range. The thermoplastic polyolefin resin may be one that has a greater than 35% transmittance at 300 nm, and greater than 85% transmittance at and above 350 nm. For example, ZEONOR (R), available from Zeon Corporation of Tokyo, Japan, may be used. The thermoplastic polyolefin resin may be one that has a greater than 60% transmittance at 300 nm, and greater than 85% transmittance at and above 350 nm. For example, ZEONEX (R) 480, available from Zeon Corporation, may be used.

Light guide 74 receives light from each of light emitters 72 through dedicated input facets 120. Input facets 120 form input end face 122 at one end of light guide 74. An input facet 120 may have one or more angles that are greater than, less than, or equal to perpendicular to the normal axis of light transmission from the emitter. Also, an input facet 120 may be curved instead of flat.

In FIG. 7, there are three input facets 120, with one input facet 120 for each light emitter 72. Numeral 120 refers to any of the input facets. Numerals 120D, 120C, and 120F refer to an individual one of the input facets. Input facet 120D (occupying the left side position) is flat and oriented at an angle D greater than perpendicular (greater than 90 degrees) to normal light transmission axis or plane 124D of light emitter 72IR. Input facet 120E (occupying the center position) is curved. Input facet 120F (occupying the right side position) is flat and oriented at an angle F less than perpendicular (less than 90 degrees) to normal light transmission axis or plane 124F of light emitter 72RGB. The normal light transmission axis (or plane) is the axis (or plane) that defines the predominant direction from which light is emitted from the light emitter. The normal light transmission axis (or plane) may correspond to the center of beam angle 126 of the light emitter.

At least one input facet 120 is oriented at a non-zero angle relative to another one of the input facets 120. Each input facet 120 is oriented to direct light it receives from one of light emitters 72 toward all of branches 76 of light guide 74.

As shown in FIG. 7, input facet 120D is oriented at a non-zero angle relative to input facet 120F. Input facet 120D is oriented to direct light received from light emitter 72IR to all of branches 76 of light guide 74, as indicated by exemplary light rays 130IR. Some light rays 130IR reach a particular branch 76 by being reflected internally from first side face 132 (at the left side) and/or second side face 136 (at the right side) of light guide 74. Input facet 120E is not flat. For example, input facet 120E may be curved or alternatively it may have two flat faces forming a V-shape. The curvature or the V-shape directs light received from light emitter 72UV to all of branches 76 of light guide 74, as indicated by exemplary light rays 130UV. Some light rays 130UV reach a particular branch 76 by being reflected internally from first side face 132 and/or second side face 136 of light guide 74. Input facet 120F is oriented to direct light received from light emitter 72RGB to all of branches 76 of light guide 74. Some light rays from input facet 120F reach a particular branch 76 by being reflected internally from first side face 132 and/or second side face 136 of light guide 74. The light rays from input facet 120F may be a mirror image of light rays 130IR since light guide 74 is symmetric about central axis 75. Due to symmetry about central axis 75, first side face 132 is a mirror image of second side face 136.

Input end face 122 of light guide 74 is arranged with direct sight lines to all branches 76 of light guide 74. For example, some light rays coming from input facet 120D reach one or all branches 76 directly. Here, the term "directly" means that the light ray reaches the branch without internal reflection within light guide 74. Some light rays coming from input facet 120E reach one or all branches 76 directly. Some light rays coming from input facet 120F reach one or all branches 76 directly. The ability of light to reach a particular branch 76 directly may depend on the orientation of the input facet 120 in combination with beam angle 126 of the light emitter directly above the input facet 120.

With ultraviolet light possibly being more sensitive to loss of intensity when passing through the material of light guide 74, it may be advantageous for light emitter 72UV to occupy the center position of light guide 74, as shown. The center portion may allow more light rays from light emitter 72UV to travel directly to branches 76 as compared to the left and right side positions occupied by light emitters 72IR and 72RGB.

In FIG. 7, numeral 76 refers to any of the branches. Numerals 76A, 76B, and 76C refer to individual branches. Letters A, B, and C correspond to the optical channels previously described in FIG. 4. The center position (occupied by input facet 120E) may rely less on side facets 134, 138 in directing light to branches 76, making it easier to direct the outermost light emission in the light beam angle (i.e., light rays at the outer fringes of the light beam angle) down to all branches 76 as compared to the left and right positions occupied by side input facets 120D, 120F. Thus, the more important or more sensitive analytical wavelengths, such as UV and infrared, may be supplied to light guide 74 at center input facet 120E. In the figures, UV light from light emitter 72UV is supplied to light guide 74 at center input facet 120E. Alternatively, infrared light may instead be supplied to light guide 74 at center input facet 120E.

The curved or V-shaped configuration of input facet 120E collects a wider portion of the beam angle of a light emitter and directs light toward side branches 76A, 76C. In addition or alternatively, a portion of input facet 120E may be diffused to limit the amount of light reaching central branch 76B. In addition or alternatively, any of side input facets 120D, 120F may be diffused. In addition or alternatively, the opening of central branch 76B may be less than that of side branches 76A, 76C. Side branches 76A, 76C with greater openings than central branch 76B may allow side branches 76A, 76C to collect more UV so that the intensity of UV light is uniform for all branches 76.

The openings of branches 76 discussed above correspond to joint widths 140 at areas where branches 76 meet body 75 of light guide 74. Each joint width 140 is measured along a straight line between point 142 on a terminal end of one side of the branch 76 and the nearest point on the opposite side of the branch 76. Joint widths 140 do not correspond to an actual physical interface between branches 76 and body 75 of light guide 74. Here, a "physical interface" is an area where two distinct surfaces meet. A physical interface, if present, between branches 76 and body 75 of light guide 74 may lead to undesirable internal reflections and/or undesirable loss of intensity in light passing from body 75 to branches 76. Branches 76 and body 75 are integral parts of light guide 74. Branches 76 and body 75 form a unitary structure that defines light guide 74 so that there is no physical interface present between body 75 and any of branches 76.

First side face 132 is formed by an interconnected series of first side facets 134. Each first side facet 134 is oriented to reflect light from at least one of light emitters 72 to at least one of branches 76 of light guide 74. One or more of the first side facets 134 may be flat. One or more of the first side facets 134 may be curved instead of flat.

Second side face 136 is formed by an interconnected series of second side facets 138. Each second side facet 138 is oriented to reflect light from at least one of light emitters 72 to at least one of branches 76 of light guide 74. One or more of the second side facets 138 may be flat. One or more of the second side facets 138 may be curved instead of flat.

The orientation (for example, angles D and F shown FIG. 7) and/or radius of curvature of input facets 120 are selected such that the light from light emitters 72 is directed to faceted side faces 132, 136 of light guide 74. First and second side faces 132, 136 distribute light, via internal reflection within light guide 74, to three output end faces 144 of branches 76 of light guide 74. Output end faces 144 are located at the tips of branches 76. First and second side facets 134, 136 may be polished to facilitate internal reflection and minimize loss of light intensity. Output end faces 144 may be clear, polished, diffused (i.e., matted) or partially diffused (i.e., partially matted). Each output end face 144 is aligned with one of optically transmitting windows 80 (FIG. 3) so that light is delivered into a corresponding one of the upper optical paths 82 beneath windows 80.

As indicated above, light emitter 72RGB includes multiple electronic dies, with each die emitting a different analytical wavelength. It may be desirable to have light from the three analytical wavelengths (red, green, and blue light) be uniformly distributed to all branches 76. This may avoid or minimize one branch 76 from receiving more red light than another branch 76, for example. Also, this may avoid or minimize one branch 76 from receiving more red light than blue light, for example.

To facilitate uniform distribution of red, green, and blue light, all light emitting elements of light emitter 72RGB may be arranged to emit light along the same light transmission plane 124F of FIG. 7. This may be accomplished by aligning light emitting elements 148 on straight line 150 that lies on light transmission plane 124F, as shown in FIG. 8. All light emitting elements are the same distance away from input end face 122, specifically input facet 120F. One light emitting element 148 emits red light. Another light emitting element 148 emits green light. The remaining light emitting element 148 emits blue light.

Referring again to FIG. 7, there is a single branch 76 for each upper optical path 82. There are three upper optical paths 82 (see, for example, FIG. 4), and so there are three branches 76. It is contemplated that substrate holding assembly 12 may have only two upper optical paths or more than three upper optical paths. The number of upper optical paths, each with its own branch 76 and photometric sensor 88, may depend on the intended use of apparatus 10 and the type of analyte to be studied. For instance, one or more reference channels may be used to control the intensity of light emitted from the light emitters, or may be used to track light intensity over time.

In FIG. 7, each analytical wavelength is produced using only a single light emitting element. Within light emitter 72IR there is only one light emitting element that produces infrared light. Alternatively or additionally, within light emitter 72UV there is only one light emitting that produces UV light. Alternatively or additionally, within light emitter 72RGB there is only one light emitting element that produces red light. Alternatively or additionally, only one light emitting element that produces green light. Alternatively or additionally, only one light emitting element that produces blue light. This allows for reduced power consumption by apparatus 10 and may thereby extend the operational runtime of apparatus 10 as compared to conventional instruments which require more than one light emitting element for each analytical wavelength in order to achieve a uniform distribution of the analytical wavelength to all collection and reference channels. The ability to have only one light emitting element per analytical wavelength is made possible, in part by, the arrangement of the light emitting elements described above, and beam angle 26 of each light emitting element in combination with the shape of light guide 74 which makes use of internal reflections so that light is uniformly distributed to all branches 76 of the light guide and to all collection and reference channels.

Each of the light emitting elements can be a distinct light emitting diode (LED), electronic die that generates light, or electro-luminescent component. When only a single light emitting element is used to generate each analytical wavelength, it is desirable for the light to spread sufficiently outward from each light emitting element toward each branch 76 in order to achieve uniform lighting in all branches. Although a longer light guide may allow the light to spread sufficiently outward, the longer travel distance through the light guide may require the light emitting element to be much larger and may also diminish the intensity of the light. To allow for sufficient spreading of light from input end face 122 to output end faces 144 without undue loss of light intensity, length L of light guide 74 may be from one to two times spread distance 202 of the collection and reference channels. That is, the ratio of L to spread distance 202 may be from 1 to 2. More narrowly, the ratio may be from 1 to 1.5.

It is to be understood that light guide 74 may also be used to convey analytical wavelengths with multiple light emitting elements generating each analytical wavelength.

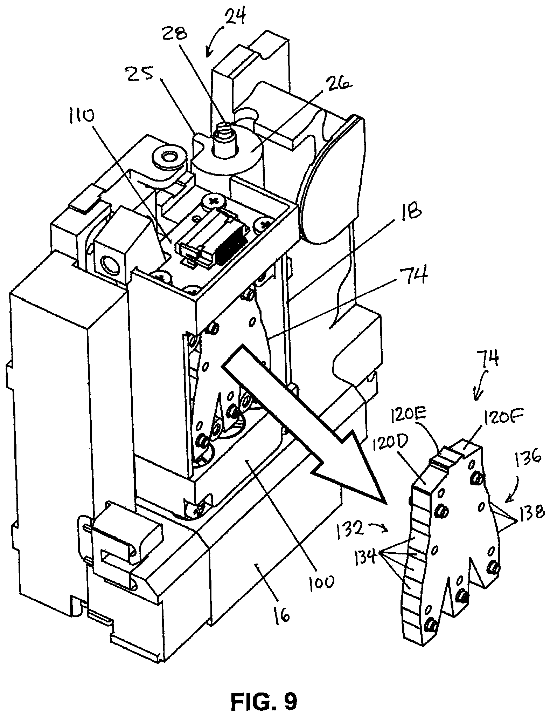

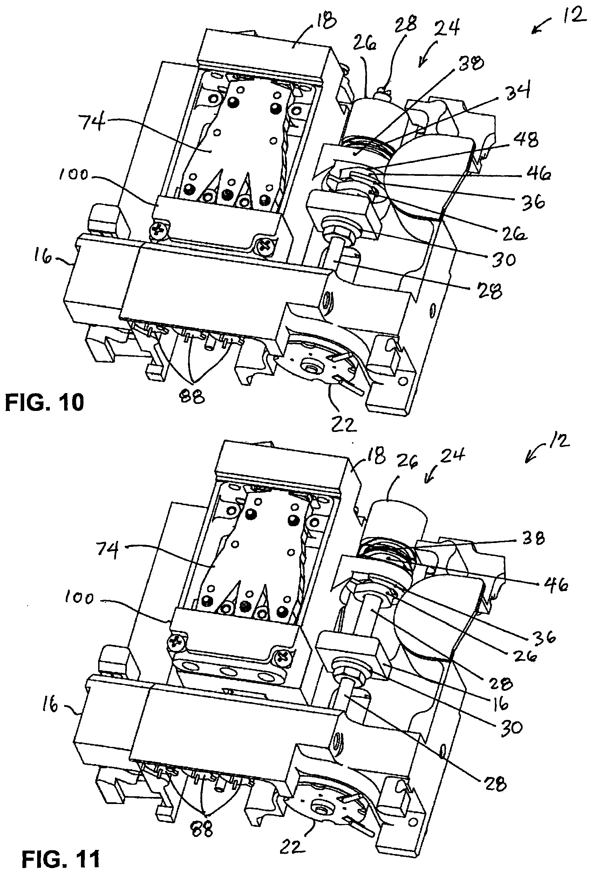

Substrate holding assembly 12 of FIGS. 1-6 may be configured as shown in FIGS. 9-11. FIGS. 9 and 10 show lower and upper housings 16, 18 in a separated or open orientation relative to each other. FIG. 11 shows lower and upper housings 16, 18 in a clamped or closed orientation.

As shown in FIGS. 9 and 10, screw subassembly 24 includes a nut 26. Flag 25 (FIG. 9) is fixedly secured to nut 26. For example, flag 25 may be integral to the body of nut 26. Spring 34 (FIG. 10) is pre-loaded (i.e., under compression) when installed in screw subassembly 24. Spring 34 is compressed further only in the clamping direction by the rotation of screw 28 only after (not before) upper housing 18 has come into contact with the substrate (not shown in FIGS. 9-11). A C-clip forms first lip 36 that transmits upward force to upper housing 18.

In other aspects, the screw of screw subassembly 24 could be a ball screw or other type of mechanism that converts rotational motion to linear motion such, or a device that directly produces linear motion such as a solenoid, air piston, linear motor, or a rotational motor with a cam or integral screw mechanism.

As shown in FIGS. 10 and 11, the lower segment and central segment 46 of nut 26 has a triangular shape with flat surfaces that prevent nut 26 from rotating together with screw 28. The triangular shape mates with the triangular shape of bore 48 in upper housing portion 38. The triangular shapes of central segment 46 and bore 48 allow nut 26 to slide linearly in bore 48 in the same axis of motion as upper housing 18. The corresponding mating shapes of central segment 46 and bore 48 need not be triangular. For example, the corresponding mating shapes may be square, instead of triangular, or any other shape that allows for linear motion of nut 26 without significant rotation. With nut 26 constrained in this way, rotation of screw 28 forces nut 26 to move linearly to apply an upward force to upper housing 18 or to enable spring 34 to apply a downward force to upper housing 18.

In FIG. 10, upper housing 18 is in its down and clamped position. Spring 34 is compressed by the nut 26, and spring 34 exerts a force on upper housing 18 which would clamp the substrate between lower and upper housings 16, 18. No substrate is shown in FIG. 10.

In FIG. 11, upper housing 18 is in its up and unclamped position. Spring 34 is decompressed (not compressed as much as in FIG. 9). Spring 34 is slightly preloaded (e.g., slightly compressed) so as to inhibit or prevent upper housing 18 from moving after nut 26 has stopped moving. Nut 26 is not exerting a force on upper housing 18 in the direction of the substrate or lower housing 16. First lip 36 (in the form of C-clip mated to the body of nut 26) transmits a lifting force to upper housing 18. First lip 36 contacts upper housing portion 38. First lip 36 also keeps nut 26 from passing completely through bore 48 (FIG. 10).

For any substrate holding assembly 12 described herein, substrate 14 may be carried in a cartridge. The cartridge may allow for ease of insertion of substrate 14 between lower and upper housings 16, 18 and for subsequent removal of substrate 14.

FIGS. 12 and 13 show an exemplary cartridge 160. Other components of apparatus 10 are schematically depicted in broken line.

Cartridge 160 includes case 162 and two spools 164. Spools 164 are rotatably secured to front and rear faces 166, 168 of case 160. Here, rotatably secured means that each spool 164 is capable of rotating about rotational axis 170 at the center of the spool, while the spool is prevented from moving away from rotational axis 170.

Substrate 14 is in the form of an elongate strip. Case 162 includes opening 172 through which a segment of the elongate strip of substrate 14 is exposed. The exposed segment allows an analyte to be deposited, trapped, or interact with substrate 14 when cartridge 160 is placed within an analytical instrument. It is contemplated that cartridge 160 may be used with a variety of analytical instruments designed to study an analyte. For example, the exposed segment of substrate 14 may be secured between lower and upper housings 16, 18 of substrate holding assembly 12 described herein.

In FIG. 11, first segment 174 of substrate 14 is initially located between lower and upper housings 16, 18. Substrate 14 is wound around the left side spool 164. The opposite end 176 of substrate 14 is fixedly secured to right side spool 164. Rotation of right side spool 164, such as by spool motor 178 of apparatus 10, in direction 180 causes substrate 14 to unwind from the left side spool and slide through the narrow gap between lower and upper housings 16, 18. Rotation may be performed after electronic controller 182 completes analysis of output from photometric sensors 88 within lower housing 16. After analysis is completed, controller 182 may send a spooling command signal to spool motor 178 to advance substrate 14 so that first segment 174 moves into case 162, and second segment 184 of substrate 14 moves out of case 162 while sliding into position between lower and upper housings 16, 18. Thereafter, controller 182 may send a clamping command signal to motor 22 of the actuator assembly of substrate holding assembly 12 in order to lower and clamp upper housing 18 onto second segment 184 of substrate 14. Next, controller 182 may send a suction command signal to vacuum pump 186 of apparatus 10 to apply a vacuum to the lower optical paths within lower housing 12, which causes analyte to be suctioned to second segment 184 of substrate 14.

Electronic controller 182 is in communication with spool motor 178, motor 22 of substrate holding assembly 12, vacuum pump 186, and other components of apparatus 10 discussed below. Electronic controller 182 may include one or more microprocessors and memory storage components. Electronic controller 182 may be programmed with algorithms and instructions for carrying out the functions described herein.

Substrate 14 is made of a flat sheet of material. To facilitate photometric analysis, the material is preferably white and allows for transmission of light through substrate 14. The criticality of the material color and light transmission property may depend on the analytical wavelengths that are actually used in apparatus 10 and/or the analyte of interest. The material may be formed of fibers pressed to form a sheet. For example, quartz fibers may be used, as in US Patent No. 4,893,934. Glass (for example, borosilicate) fibers may be used. Quartz and glass fibers may be susceptible to damage, such as when substrate 14 is handled or bent by the user, or such as when substrate 14 is spooled within cartridge 160. To prevent or minimize damage to substrate 14, substrate may be formed of non-quartz and non-glass fibers (i.e., fibers not containing any quartz and not containing any glass). For example, polymeric fibers may be used instead.

Substrate 14 may be made of a porous sheet of non-fibrous polymer material. Non-fibrous polymer material is a material consisting essentially of one or more polymers, with no discernible polymer fibers in the finished material which is cut to a desired size to make substrate 14. The non-fibrous polymer material has pores in a size range that would allow passage of air through substrate 14 but retain the analyte of interest. The pore size may be in the range of 1 to 10 microns, 1 to 4 microns, 1 to 2 microns, 3 to 4 microns, 4 to 5 microns, or 5 to 6 microns. The size of the pores may depend on the type of analyte of interest.

Substrate 14 may be a membrane of porous polytetrafluoroethylene (PTFE). Porous PTFE membranes are commercially available in various pore sizes. If the analyte of interest is black carbon or similarly sized constituent, the porous PTFE membrane may have a functional pore size of 1 to 2 microns or 3 to 4 microns. To facilitate photometric analysis, the porous PTFE membrane is preferably white. The criticality of the membrane color may depend on the analytical wavelengths that are actually used in apparatus 10. To facilitate air flow though substrate 14, the porous PTFE membrane may have a pore volume from 40% to 55%. It may also be desirable for substrate 14 to have sufficient mechanical strength to prevent or inhibit stretching without any need for a backing or support layer. Stretching may occur when substrate 14 is manually handled by a user or when substrate 14 is pulled and unwound from a spool of cartridge 160. It is believed that a greater thickness may provide greater strength; however, an overly thick substrate may result in insufficient air flow and/or insufficient light transmission through the substrate. To prevent or inhibit stretching while allowing for needed air flow and light transmission, the porous PTFE membrane may, for for example have a material thickness of 0.127 to 0.381 mm with an average breaking strength of at least 89.29 Kg/m.

Applicant has found that substrate 14 made of either of the porous PTFE membranes in TABLE I is suitable for studying black carbon using the five analytical wavelengths described herein. It is contemplated that the examples in TABLE I may be used for another type of analyte and/or with other analytical wavelengths. The examples do not require a backing or support layer to be added to the membrane for mechanical stability. The examples may be used with cartridge 160 having a minimum spool diameter selected to prevent or reduce the risk of undue deformation or damage to substrate 14. For example, the bend radius (half of the diameter) of spool 164 may be at least 10 mm, or at least 15 mm, or from 15 mm to 50 mm. Larger spool diameters are believed to be less likely to result in deformation or damage to the substrate; however, overly large spool diameters will make cartridge 160 less compact and potentially unsuitable for small, portable instruments. To reduce the risk of deformation or damage while allowing for a compact cartridge size, the bend radius of spool 164 may be 15 mm, or from 10 mm to 20 mm.

**TABLE I**

| | EXAMPLE 1 | EXAMPLE 2 |
|---|---|---|
| Material | porous PTFE membrane | porous PTFE membrane |
| Color | white | white |
| Functional pore size | 1 to 2 microns | 3 to 4 microns |
| Material thickness | 0.08 to 0.12 inch | 0.06 to 0.10 inch |
| Break strength | 11 to 13 lb/inch width | 9 to 10 lb/inch width |
| Pore Volume | 39 to 41% | 44 to 46% |
| Air Flow (note 1) | 5-6 seconds | 4-5 seconds |
| Note 1: Air flow determined according to the Gurley Densitometer Test at 100 cc/1.0 square inch/20 oz. | | |

As shown in FIGS. 14 and 15, substrate 14 may be an elongate strip of material having strip width 190 and material thickness 192. Strip width 190 is greater than the diameter of optical areas 92 described in FIG. 4. Index holes 194 may be formed through substrate 14 to facilitate or track the amount of movement of substrate 14 through an analytical instrument. Strip width 190 may be in the range of 3 mm to 20 mm, or 5 mm to 15 mm, or 5 mm to 10 mm.

For example, substrate 14 within cartridge 160 (FIG. 12) may have index holes 194 so that it can be determined when a clean segment of substrate 14 has moved into place between lower and upper housings 16, 18. Controller 182 may receive an indexing signal from index sensor 196 of apparatus 10. Index sensor 196 detects index holes 194 mechanically or optically. Controller 182 may send spooling command signals to spool motor 178 according to indexing signals from index sensor 196. Based on the spooling command signals, spool motor 178 may stop rotation of spool 164 when segment 184 has sufficiently moved into position between lower and upper housings 16, 18. Index holes 194 or groups 198 of index holes are spaced uniformly apart from each other by predetermined distance 200. Predetermined distance 200 is greater than spread distance 202 of optical areas 92 defined by lower and upper housings 16, 18 or as defined by another analytical instrument.

The size and/or group configuration of index holes 194 may differ. For example, the hole size and/or group configuration at the beginning of the substrate strip may differ from the hole size and/or group configuration near the end of the substrate strip. This change may be detected by index sensor 196, which may send corresponding indexing signals indicating that only a few usable segments of substrate 14 remain within cartridge 160. When controller 182 receives such signals, controller 182 may warn the user by activating alert device 204 coupled to controller 182. Alert device 204 may generate any of a light, audio signal, or wireless (for example, radio frequency, Bluetooth (R), etc.) signal to alert a user to prepare for replacement of cartridge 160.

The present invention has many potential uses. For example and without limitation, the present invention may be used with photometric analyzers and air quality monitors that measure the optical absorption of light absorbing particles, such as black carbon or other type of analyte. Such instruments may be stationary or mobile, and may have used for on-person monitoring. Such instruments may be used to monitor ambient concentrations and/or to assess personal exposure to one or more pollutants of interest.

In some aspects, the invention described herein may enable smaller, lighter weight implementation of a photometric particle analyzer with an emphasis in the reduction of power consumption and physical size, while improving optical stability and adding additional analytical measurements, enabling automatic and unattended use for extended periods of time.

While several particular forms of the invention have been illustrated and described, it will also be apparent that various modifications can be made without departing from the scope of the invention. Accordingly, it is not intended that the invention be limited, except as by the appended claims.

## Claims

1. A cartridge (160) for receiving an analyte, the cartridge comprising:
a case (162);
a first spool (164) rotatable within the case;
a second spool (164) rotatable within the case; and
a substrate (14) in the form of a strip of material having a first end attached to the first spool and a second end attached to the second spool, the strip of material including porous PTFE,
**characterized in that** the substrate is a membrane of porous PTFE with neither a backing nor a support layer.

2. The cartridge of claim 1, wherein the membrane has a functional pore size of 1 to 2 microns or 3 to 4 microns.

3. The cartridge of claim 1 or 2, wherein a plurality of index holes are formed through the strip of material, and the index holes are spaced uniformly apart from each other.

4. The cartridge of any one of claims 1 to 3, wherein the membrane has a material thickness of 0.127 mm - 0.381 mm (0.005 to 0.015 inch) with an average breaking strength of at least 89.29 kg/m (5 lbs/inch) width.

5. An apparatus for receiving an analyte, the apparatus comprising:
the cartridge according to claim 1, and
a substrate holding assembly, the substrate holding assembly configured to receive the substrate and deliver an analyte to the substrate, the substrate holding assembly including a lower housing and an upper housing, the lower housing and the upper housing movable relative to each other to secure the substrate between the lower and upper housings.

6. The apparatus of claim 5, further comprising an actuator assembly including a motor and a screw subassembly operatively coupled to the motor and the upper housing, the screw subassembly, which when actuated by the motor, causes the upper and lower housings to move away from each other to allow insertion or removal of the substrate from between the lower and upper housings.

7. The apparatus of claim 6, wherein the screw subassembly includes a nut and a screw engaged to the nut, the screw moves the nut from a first position on the screw to a second position on the screw when the motor actuates the screw subassembly, the nut is operatively coupled to the upper housing such that when the nut is in the first position the upper housing is in a lowered position relative to the lower housing to allow the substrate to be secured between the upper and lower housings, and when the nut is in the second position the upper housing is in a raised position relative to the lower housing to allow the substrate to the released from between the upper and lower housings.

8. The apparatus of claim 7, wherein the screw subassembly includes a spring operatively coupled to upper housing, the spring causes the upper housing to press on substrate when the nut is in the first position while the substrate is present between the lower and upper housings, and the spring does not cause the upper housing to press on substrate when the nut is in second position while the substrate is present between the lower and upper housings.

9. The apparatus of any one of claims 6 to 8, wherein the upper housing includes an upper substrate contacting surface, the lower housing includes lower substrate contacting surface, the upper and lower substrate contacting surfaces are movable relative to each other to secure the substrate between the upper and lower substrate contacting surfaces, and
the apparatus further comprises a linear guide subassembly that includes rotating bearings that slideably carry the upper housing on the lower housing, wherein the linear guide subassembly is arrange to constrain movement of the upper substrate contacting surface to be perpendicular to the lower substrate contacting surface.

10. The apparatus of claim 9, wherein the upper substrate contacting surface includes a plurality of upper apertures, the lower substrate contacting surface includes a plurality of lower apertures, at least one of the upper apertures is arranged to convey air and the analyte, originating from outside the substrate holding assembly, toward at least one of the lower apertures, and the at least one of the lower apertures is arranged to convey the air out of the substrate holding assembly.

11. The apparatus of any one of claims 6 to 10, wherein the upper housing includes a light transmission subassembly arranged to direct light toward the lower housing, the light transmission subassembly includes one or a combination of light emitters and a light guide, and the lower housing includes a plurality of photometric sensors.

12. The apparatus of claim 11, wherein the upper housing includes a manifold including a plurality of passageways having passageway walls impermeable to light to prevent light from any one of the passageways from crossing to another one of the passageways, the passageway walls arranged to allow light from the light transmission subassembly to pass through the passageways toward the lower housing,
wherein at least one of the passageways is arranged to convey air and the analyte, originating from outside of the substrate holding assembly, toward the lower housing, and
wherein at least one of the passageways is arranged to convey either no air, clean air, or pre-filtered air.

13. The apparatus of claim 12, wherein an interface exists between the manifold and the upper housing, the interface allows for temporary removal of the manifold from the upper housing, the upper housing includes an alignment feature configured to engage the manifold, the alignment feature is configured to constrain removal of the manifold from the upper housing in a direction perpendicular to the that of the movement of the upper and lower housings relative to each other.

14. The apparatus of claim 5, further comprising a light guide fixed to the upper housing, the light guide including at least two branches arranged to direct light toward the lower housing.

15. The apparatus of claim 14, further comprising a plurality of photometric sensors fixed to the lower housing.

16. The apparatus of claim 14 or 15, further comprising a plurality of light emitters adjacent an end face of the light guide, the end face arranged with direct sight lines to the branches of the light guide.

17. The apparatus of any one of claims 5 to 16, wherein the membrane has a material thickness of 0.127 mm - 0.381 mm (0.005 to 0.015 inch) with an average breaking strength of at least 89.29 kg/m (5 lbs/inch) width.

## Patentansprüche

1. Eine Kartusche zum Empfangen von einem Analyten, wobei die Kartusche folgendes umfasst:
ein Gehäuse (162);
eine erste Spule (164), die innerhalb des Gehäuses drehen kann;
eine zweite Spule (164), die innerhalb des Gehäuses drehen kann; und
ein Substrat (14) in Form von einem Materialstreifen, der ein erstes an der ersten Spule befestigtes Ende und ein zweites an der zweiten Spule befestigtes Ende hat, wobei der Streifen von Material poröses PTFE umfasst,
**dadurch gekennzeichnet, dass** das Substrat eine Membran aus porösem PTFE ohne Rückschicht und ohne Trägerschicht ist.

2. Die Kartusche des Anspruchs 1, wobei die Membran eine funktionelle Porengröße von 1 bis 2 Mikrometern oder von 3 bis 4 Mikrometern hat.

3. Die Kartusche des Anspruchs 1 oder 2, wobei eine Vielzahl von Indexführungslöcher durch den Streifen von Material gebildet sind, und wobei die Indexführungslöcher gleichmäßig voneinander räumlich getrennt sind.

4. Die Kartusche von einem der Ansprüche 1 bis 3, wobei die Membran eine Materialdicke von 0,127 mm - 0,381 mm (0,005 bis 0,015 Zoll) mit einer durchschnittlichen Bruchfestigkeit von mindestens 89,29 kg/m (5 lb/Zoll) Breite hat.

5. Eine Vorrichtung zum Empfangen von einem Analyten, wobei die Vorrichtung folgendes umfasst:
die Kartusche nach Anspruch 1, und
eine Substrathalteanordnung, wobei die Substrathalteanordnung konfiguriert ist, um das Substrat zu empfangen und einen Analyten an das Substrat zu übermitteln, wobei die Substrathalteanordnung ein unteres Gehäuse und ein oberes Gehäuse umfasst, wobei das untere Gehäuse und das obere Gehäuse bezüglich einander bewogen werden können, um das Substrat zwischen dem unteren und dem oberen Gehäuse zu fixieren.

6. Die Vorrichtung des Anspruchs 5, weiterhin umfassend eine Antriebsanordnung umfassend einen Motor und eine Schraube-Unteranordnung, die betriebsfähig an dem Motor und an dem oberen Gehäuse gekoppelt ist, wobei die Schraube-Unteranordnung, wenn sie durch den Motor angetrieben wird, eine Bewegung des oberen und des unteren Gehäuses weg voneinander hervorbringt, um die Einführung oder die Entfernung des Substrats aus zwischen dem unteren und dem oberen Gehäuse zu ermöglichen.

7. Die Vorrichtung des Anspruchs 6, wobei die Schraube-Unteranordnung eine Gewindemutter und eine im Eingriff mit der Gewindemutter stehende Schraube umfasst, wobei die Schraube die Gewindemutter von einer ersten Position auf der Schraube in eine zweite Position auf der Schraube bewegt, wenn der Motor die Schraube-Unteranordnung antreibt, wobei die Gewindemutter betriebsfähig an dem oberen Gehäuse gekoppelt ist, so dass, wenn die Gewindemutter in der ersten Position ist, das obere Gehäuse in einer bezüglich des unteren Gehäuses abgesenkten Position ist, um das Substrat zwischen dem oberen und dem unteren Gehäuse fixieren zu können, und wobei, wenn die Gewindemutter in der zweiten Position ist, das obere Gehäuse in einer bezüglich des unteren Gehäuses angehobenen Position ist, um das Substrat aus zwischen dem oberen und dem unteren Gehäuse lösen zu können.

8. Die Vorrichtung des Anspruchs 7, wobei die Schraube-Unteranordnung eine Feder umfasst, die am oberen Gehäuse betriebsfähig gekoppelt ist, wobei die Feder eine Pressbewegung des oberen Gehäuse auf das Substrat hervorbringt, wenn die Gewindemutter in einer ersten Position ist, während das Substrat zwischen dem unteren und dem oberen Gehäuse anwesend ist, und die Feder keine Pressbewegung des oberen Gehäuses auf das Substrat hervorbringt, wenn die Gewindemutter in der zweiten Position ist, während das Substrat zwischen dem unteren und dem oberen Gehäuse anwesend ist.

9. Die Vorrichtung von einem der Ansprüche 6 bis 8, wobei das obere Gehäuse eine obere in Kontakt mit dem Substrat kommende Fläche umfasst, wobei das untere Gehäuse eine untere in Kontakt mit dem Substrat kommende Fläche umfasst, wobei die obere und die untere in Kontakt mit dem Substrat kommende Fläche bezüglich einander bewogen werden können, um das Substrat zwischen der oberen und der unteren in Kontakt mit dem Substrat kommenden Fläche fixieren zu können, und
wobei die Vorrichtung weiterhin folgendes umfasst: eine lineare Führungs-Unteranordnung, die drehende Lager umfasst, die das obere Gehäuse auf dem unteren Gehäuse verschieblich tragen, wobei die lineare Führungs-Unteranordnung angeordnet ist, um die Bewegung von der oberen in Kontakt mit dem Substrat kommenden Fläche zu beschränken, so dass sie senkrecht zu der unteren in Kontakt mit dem Substrat kommenden Fläche ist.

10. Die Vorrichtung des Anspruchs 9, wobei die obere in Kontakt mit dem Substrat kommende Fläche eine Vielzahl von oberen Öffnungen umfasst, wobei die untere in Kontakt mit dem Substrat kommende Fläche eine Vielzahl von unteren Öffnungen umfasst, wobei mindestens eine von den oberen Öffnungen angeordnet ist, um Luft und den Analyten zu leiten, ausgehend von Außerhalb der Substrathalteanordnung, in Richtung zu mindestens einer von den unteren Öffnungen, und wobei die mindestens eine von den unteren Öffnungen angeordnet ist, um die Luft aus der Substrathalteanordnung heraus zu leiten.

11. Die Vorrichtung von einem der Ansprüche 6 bis 10, wobei das obere Gehäuse eine Lichtübertragungs-Unteranordnung umfasst, die angeordnet ist, um Licht in Richtung zum unteren Gehäuse zu richten, wobei die Lichtübertragungs-Unteranordnung eine oder eine Kombination aus Lichtsendern und einem Lichtleiter umfasst, und wobei das untere Gehäuse eine Vielzahl von photometrischen Sensoren umfasst.

12. Die Vorrichtung des Anspruchs 11, wobei das obere Gehäuse einen Verteiler umfasst, der eine Vielzahl von Durchgängen hat, die Durchgangswände haben, die lichtundurchlässig sind, um den Durchgang von Licht von einem der Durchgänge auf einen anderen der Durchgänge zu vermeiden, wobei die Durchgangswände angeordnet sind, um den Durchgang von Licht aus der Lichtübertragungs-Unteranordnung durch die Durchgänge in Richtung zum unteren Gehäuse zu ermöglichen,
wobei mindestens einer der Durchgänge angeordnet ist, um Luft und den Analyten ausgehend von Außerhalb der Substrathalteanordnung in Richtung zum unteren Gehäuse zu leiten, und
wobei mindestens einer der Durchgänge angeordnet ist, um entweder keine Luft, saubere Luft oder vorgefilterte Luft zu leiten.

13. Die Vorrichtung des Anspruchs 12, wobei eine Schnittstelle zwischen dem Verteiler und dem oberen Gehäuse vorhanden ist, wobei die Schnittstelle das zeitweise Entfernen des Verteilers aus dem oberen Gehäuse ermöglicht, wobei das obere Gehäuse ein Ausrichtungsmerkmal umfasst, das konfiguriert ist, um in Eingriff mit dem Verteiler zu kommen, wobei das Ausrichtungsmerkmal konfiguriert ist, um das Entfernen des Verteilers aus dem oberen Gehäuse in einer Richtung zu beschränken, die senkrecht zu der Richtung der Bewegung des oberen und des unteren Gehäuses bezüglich einander ist.

14. Die Vorrichtung des Anspruchs 5, weiterhin umfassend einen Lichtleiter, der am oberen Gehäuse befestigt ist, wobei der Lichtleiter mindestens zwei Zweige umfasst, die angeordnet sind, um Licht in Richtung zum unteren Gehäuse zu richten.

15. Die Vorrichtung des Anspruchs 14, weiterhin umfassend eine Vielzahl von photometrischen Sensoren, die am unteren Gehäuse befestigt sind.

16. Die Vorrichtung des Anspruchs 14 oder 15, weiterhin umfassend eine Vielzahl von Lichtsendern, die an eine Endseite des Lichtleiters angrenzen, wobei die Endseite mit direkten Visierlinien zu den Zweigen des Lichtleiters angeordnet ist.

17. Die Vorrichtung von einem der Ansprüche 5 bis 16, wobei die Membran eine Materialdicke von 0,127 mm - 0,381 mm (0,005 bis 0,015 Zoll) mit einer durchschnittlichen Bruchfestigkeit von mindestens 89,29 kg/m (5 lb/Zoll) Breite hat.

## Revendications

1. Un cartouche de réception d'un analyte, le cartouche comprenant :
une caisse (162) ;
une première bobine (164) qui peut pivoter dans la caisse ;
une seconde bobine (164) qui peut pivoter dans la caisse ; et
un substrat (14) en forme d'une bande de matériau ayant une première extrémité attachée à la première bobine et une seconde extrémité attachée à la seconde bobine, la bande de matériau incluant du PTFE poreux,
**caractérisé en ce que** le substrat est une membrane de PTFE poreux sans couche dorsale et sans couche de support.

2. Le cartouche de la revendication 1, dans lequel la membrane a une taille des pores fonctionnelle de 1 à 2 micromètres ou de 3 à 4 micromètres.

3. Le cartouche de la revendication 1 ou 2, dans lequel une pluralité de trous d'index sont formés à travers la bande de matériau et les trous d'index sont espacés de manière uniforme les uns par rapport aux autres.

4. Le cartouche de l'une quelconque des revendications 1 à 3, dans lequel la membrane a une épaisseur de matériau de 0,127 mm - 0,381 mm (de 0,005 à 0,015 pouces) avec une résistance à la rupture moyenne d'au moins 89,29 kg/m (5 lb/pouce) de largeur.

5. Un dispositif de réception d'un analyte, le dispositif comprenant :
le cartouche selon la revendication 1, et
un ensemble de soutien de substrat, l'ensemble de soutien de substrat étant configuré pour recevoir le substrat et fournir un analyte au substrat, l'ensemble de soutien de substrat incluant un boîtier inférieur et un boîtier supérieur, le boîtier inférieur et le boîtier supérieur pouvant être mus l'un par rapport à l'autre de façon à assujettir le substrat entre les boîtiers inférieur et supérieur.

6. Le dispositif de la revendication 5, comprenant en outre un ensemble d'actionnement incluant un moteur et un sous-ensemble à vis couplé de façon opérationnelle avec le moteur et avec le boîtier supérieur, où le sous-ensemble à vis, lors de son actionnement par le moteur, entraîne un mouvement de séparation des boîtiers supérieur et inférieur l'un par rapport à l'autre afin de permettre l'insertion ou l'enlèvement du substrat d'entre les boîtiers inférieur et supérieur.

7. Le dispositif de la revendication 6, dans lequel le sous-ensemble à vis inclut un écrou et une vis en prise avec l'écrou, la vis déplace l'écrou d'une première position sur la vis jusqu'à une seconde position sur la vis lorsque le moteur actionne le sous-ensemble à vis, l'écrou est couplé de façon opérationnelle avec le boîtier supérieur de façon que, lorsque l'écrou est dans la première position le boîtier supérieur est dans une position abaissée par rapport au boîtier inférieur pour permettre que le substrat soit fixé entre les boîtiers supérieur et inférieur et, lorsque l'écrou est dans la seconde position le boîtier supérieur est dans une position relevée par rapport au boîtier inférieur pour permettre que le substrat sois libéré d'entre les boîtiers supérieur et inférieur.

8. Le dispositif de la revendication 7, dans lequel le sous-ensemble à vis inclut un ressort couplé de façon opérationnelle avec le boîtier supérieur, le ressort entraîne une compression par le boîtier supérieur sur le substrat lorsque l'écrou est dans la première position alors que le substrat est présent entre les boîtiers inférieur et supérieur, et le ressort n'entraîne pas de compression par le boîtier supérieur sur le substrat lorsque l'écrou est dans la seconde position alors que le substrat est présent entre les boîtiers inférieur et supérieur.

9. Le dispositif de l'une quelconque des revendications 6 à 8, dans lequel le boîtier supérieur inclut une surface supérieure de contact avec le substrat, le boîtier inférieur inclut une surface inférieure de contact avec le substrat, les surfaces de contact avec le substrat supérieure et inférieure sont mobiles l'une par rapport à l'autre de façon à assujettir le substrat entre les surfaces de contact avec le substrat supérieure et inférieure, et
le dispositif comprend en outre un sous-ensemble de guidage linéaire qui inclut des paliers rotatifs qui portent de manière coulissante le boîtier supérieur sur le boîtier inférieur, dans lequel le sous-ensemble de guidage linéaire est disposé afin de contraindre le mouvement de la surface supérieure de contact avec le substrat de façon qu'elle soit perpendiculaire à la surface inférieure de contact avec le substrat.

10. Le dispositif de la revendication 9, dans lequel la surface supérieure de contact avec le substrat inclut une pluralité d'ouvertures supérieures, la surface inférieure de contact avec le substrat inclut une pluralité d'ouvertures inférieures, au moins une des ouvertures supérieures est disposée de façon à transporter de l'air et l'analyte, de l'extérieur de l'ensemble de soutien de substrat vers au moins une des ouvertures inférieures, et l'au moins une des ouvertures inférieures est disposée de façon à transporter l'air hors de l'ensemble de soutien de substrat.

11. Le dispositif de l'une quelconque des revendications 6 à 10, dans lequel le boîtier supérieur inclut un sous-ensemble de transmission de lumière disposé pour diriger de la lumière vers le boîtier inférieur, le sous-ensemble de transmission de lumière inclut un ou une combinaison d'émetteurs de lumière et un guide de lumière, et le boîtier inférieur inclut une pluralité de capteurs photométriques.

12. Le dispositif de la revendication 11, dans lequel le boîtier supérieur inclut un collecteur incluant une pluralité de passages ayant des parois de passage imperméables à la lumière afin d'empêcher que la lumière d'un quelconque des passages passe à un autre passage, les parois de passage étant disposées de façon à permettre le passage de lumière du sous-ensemble de transmission de lumière à travers les passages vers le boîtier inférieur,
dans lequel au moins un des passages est disposé pour transporter de l'air et l'analyte, de l'extérieur de l'ensemble de soutien de substrat vers le boîtier inférieur, et
dans lequel au moins un des passages est disposé de façon à ne pas transporter d'air, transporter de l'air propre o transporter de l'air pré-filtré.

13. Le dispositif de la revendication 12, dans lequel il y existe une interface entre le collecteur et le boîtier supérieur, l'interface permet l'enlèvement temporaire du collecteur du boîtier supérieur, le boîtier supérieur inclut une caractéristique d'alignement configurée pour embrayer le collecteur, la caractéristique d'alignement est configurée pour contraindre l'enlèvement du collecteur par rapport au boîtier supérieur dans une direction perpendiculaire à celle du mouvement des boîtiers supérieur et inférieur l'un par rapport à l'autre.

14. Le dispositif de la revendication 5, comprenant en outre un guide de lumière fixé au boîtier supérieur, le guide de lumière incluant au moins deux branchements disposés pour diriger de la lumière vers le boîtier inférieur.

15. Le dispositif de la revendication 14, comprenant en outre une pluralité de capteurs photométriques fixés au boîtier inférieur.

16. Le dispositif de la revendication 14 ou 15, comprenant en outre une pluralité d'émetteurs de lumière adjacents à une face d'extrémité du guide de lumière, la face d'extrémité étant disposée avec des lignes de visée directes aux branchements du guide de lumière

17. Le dispositif de l'une quelconque des revendications 5 à 16, dans lequel la membrane a une épaisseur de matériau de 0,127 mm - 0,381 mm (de 0,005 à 0,015 pouces) avec une résistance à la rupture moyenne de 89,29 kg/m (5 lb/pouce) de largeur.
